# EUROPEAN PATENT APPLICATION

(11) **EP 4 773 333 A1**
(43) Date of publication of application: **08.07.2026**
(21) Application number: 24895449.7
(22) Date of filing: 20.05.2024
(51) Int. Cl.: H01M 10/48

(54) **BATTERY, BATTERY MANAGEMENT SYSTEM, AND ELECTRIC DEVICE**

(30) Priority: 28.11.2023 CN 202323248639 U
(71) Applicant: Contemporary Amperex Technology Co., Limited, Ningde, Fujian 352100 (CN)
(72) Inventor: HUANG, Jiawei, Ningde, Fujian 352100 (CN); LIU, Yifei, Ningde, Fujian 352100 (CN); ZHANG, Wenhui, Ningde, Fujian 352100 (CN)
(74) Representative: Ran, Handong
(86) International application number: PCT/CN2024/094270
(87) International publication number: WO 2025/112339

(57) **Abstract**

A battery (100), a battery management system (400), and an electric device (500). The battery (100) comprises: a case (10); a liquid leakage detection member (20), the liquid leakage detection member (20) being arranged in the case (1) to detect liquid in the case (10), and the liquid leakage detection member (20) being adapted to be communicationally connected to a control device (200) so that the control device (200) controls an alarm device (300) to operate; and a liquid drainage member (30), the liquid drainage member (30) being arranged in the case (10), and the liquid drainage member (30) being fixedly arranged on the bottom wall (11) of the case (10).

## Description

### CROSS-REFERENCE TO RELATED APPLICATIONS

The present application is based on and claims priority to Chinese Patent Application No. 202323248639.5 filed on November 28, 2023, which is incorporated herein by reference in its entirety.

### TECHNICAL FIELD

The present application relates to the field of batteries, and in particular, to a battery, a battery management system, and an electric apparatus.

### BACKGROUND

In the related art, after coolant of a battery leaks in a box, the coolant has certain conductivity, which may cause insulation failure of the battery, and easily cause a risk of electric shock. There are various factors that cause insulation failure of the battery, and it is impossible to accurately detect that the insulation failure of the battery is caused by coolant leakage, and it is impossible to timely prompt a user that the insulation failure of the battery is caused by coolant leakage. Additionally, when the coolant comes into contact with a high-voltage component inside the battery, it easily leads to a risk of fire or explosion of the battery.

### SUMMARY

The present application aims to solve at least one of the technical problems in the related art to a certain extent.

In view of this, one objective of the present application is to propose a battery, where when liquid leakage occurs in a box, a user may be timely prompted that there is liquid leakage in the battery, and liquid in the box may also be discharged.

Another objective of the present application is to propose a battery management system.

Another objective of the present application is to propose an electric apparatus.

According to a first aspect, an embodiment of the present application provides a battery, including:
a box;
a liquid leakage detection member, where the liquid leakage detection member is disposed in the box to detect liquid in the box, and the liquid leakage detection member is adapted to be communicatively connected to a control apparatus to enable the control apparatus to control an alarm apparatus to work; and
a liquid discharge member, where the liquid discharge member is disposed in the box, and the liquid discharge member is fixed to a box bottom wall of the box.

According to the battery of the present application, by providing the liquid leakage detection member and the liquid discharge member, when the liquid leakage detection member detects that liquid leakage has occurred in the box, the control apparatus can control the alarm apparatus to issue alarm information, which can timely prompt a user that there is liquid leakage in the battery, and remind the user to evacuate in time. In addition, the liquid discharge member can discharge the liquid from the box, reducing a risk of the liquid in the battery coming into contact with a high-voltage component, reducing a risk of fire or explosion of the battery, and also reducing a risk of electric shock to the user.

According to a second aspect, an embodiment of the present application also provides a battery management system, including:
a battery, where the battery is the above battery; and
a control apparatus and an alarm apparatus, where the control apparatus is communicatively connected to the liquid leakage detection member and communicatively connected to the alarm apparatus, and the control apparatus controls the alarm apparatus to work according to detection information of the liquid leakage detection member.

According to the battery management system of the present application, the control apparatus can obtain the detection information of the liquid leakage detection member in real time. When the liquid leakage detection member detects that there is liquid in the box, there is coolant leakage in the battery at this time, the control apparatus controls the alarm apparatus to issue alarm information, which can timely prompt the user that there is liquid leakage in the battery, and remind the user to evacuate in time, reducing a risk to the life safety of user. When the liquid in the box leaks, the liquid is collected on the box bottom wall of the box, and the liquid is discharged from the box of the battery through the liquid discharge member, reducing a risk of the liquid in the battery coming into contact with the high-voltage component, and reducing a risk of insulation failure of the battery, thereby reducing a risk of fire or explosion of the battery, and reducing a risk of electric shock to the user, thus enhancing the safety of the battery.

According to a third aspect, an embodiment of the present application also provides an electric apparatus, including the above battery management system.

According to the electric apparatus of the present application, by providing the battery management system, the safety of the electric apparatus is improved.

Additional aspects and advantages of the present application will be given in part in the following description, part of which will become apparent from the following description or be learned from the practice of the embodiments of the present application.

### BRIEF DESCRIPTION OF DRAWINGS

FIG. 1 is a schematic diagram of an electric apparatus according to an embodiment of the present application;
FIG. 2 is a schematic diagram of a battery according to an embodiment of the present application;
FIG. 3 is a cross-sectional view along A-A in FIG. 2;
FIG. 4 is an enlarged view of position C in FIG. 3;
FIG. 5 is a cross-sectional view along B-B in FIG. 2;
FIG. 6 is an enlarged view at D in FIG. 5;
FIG. 7 is a schematic diagram of a second box body of a battery according to an embodiment of the present application;
FIG. 8 is a schematic diagram of a battery cell according to an embodiment of the present application; and
FIG. 9 is a block diagram of a battery management system according to an embodiment of the present application.

### DESCRIPTION OF EMBODIMENTS

The embodiments of the present application are described in detail below. Examples of the embodiments are shown in the accompanying drawings, and reference signs that are the same or similar always indicate the same or similar elements or elements with the same or similar functions. The embodiments described below with reference to the accompanying drawings are illustrative and merely for explaining the present application, and cannot be construed as any limitations on the present application.

To make the objectives, technical solutions, and advantages of the embodiments of the present application clearer, the following clearly describes the technical solutions in the embodiments of the present application with reference to the accompanying drawings in the embodiments of the present application. Apparently, the described embodiments are some but not all of the embodiments of the present application. All other embodiments obtained by persons of ordinary skill in the art based on some embodiments of the present application without creative efforts shall fall within the protection scope of the present application.

Unless otherwise defined, all technical and scientific terms used in the present application shall have the same meanings as commonly understood by persons skilled in the art to which the present application relates. The terms used in the specification of the present application are intended to merely describe the specific embodiments rather than to limit the present application. The terms "include", "comprise", and any variations thereof in the specification, claims, and brief description of drawings of the present application are intended to cover non-exclusive inclusions. In the specification, claims, or accompanying drawings of the present application, the terms "first", "second", and the like are intended to distinguish between different objects rather than to describe a particular order or a primary-secondary relationship.

In the present application, reference to "embodiment" means that specific features, structures, or characteristics described with reference to the embodiment may be incorporated in at least one embodiment of the present application. The term "embodiment" appearing in various places in the specification does not necessarily refer to the same embodiment or an independent or alternative embodiment that is exclusive of other embodiments.

In the description of the present application, it should be noted that unless otherwise specified and defined explicitly, the terms "mount", "connect", "join", and "attach" should be understood in their general senses. For example, they may refer to a fixed connection, a detachable connection, or an integral connection; and a direct connection, an indirect connection via an intermediate medium, or an internal communication between two elements. Persons of ordinary skills in the art can understand specific meanings of these terms in the present application as appropriate to specific situations.

The term "and/or" in the present application is only an associative relationship for describing associated objects, indicating that three relationships may be present. For example, A and/or B may indicate the following three cases: presence of only A; presence of both A and B; and presence of only B. In addition, the character "/" in the present application generally indicates an "or" relationship between the contextually associated objects.

In the embodiments of the present application, the same reference signs denote the same components, and for brevity, in different embodiments, detailed descriptions of the same components are not repeated. It should be understood that as shown in the accompanying drawings, sizes such as thickness, length, and width of various components and sizes such as thickness, length, and width of integrated devices in the embodiments of the present application are merely for illustrative purposes and should not constitute any limitations on the present application.

In the present application, "a plurality of" means more than two (inclusive).

In the embodiments of the present application, a battery cell may be a secondary battery, and the secondary battery refers to a battery cell whose active material can be activated for continuous use through charging after the battery cell is discharged.

The battery cell may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead-acid battery. This is not limited in the embodiments of the present application.

The battery mentioned in the embodiments of the present application is a single physical module that includes one or more battery cells for providing a higher voltage and capacity. When a plurality of battery cells are provided, the plurality of battery cells are connected in series, parallel, or series-parallel via a busbar.

In some embodiments, the battery may be a battery module, and when a plurality of battery cells are provided, the plurality of battery cells are arranged and fixed to form a battery module.

In some embodiments, the battery may be a battery pack, and the battery pack includes a box and a battery cell, where the battery cell or the battery module is accommodated in the box.

In some embodiments, the box may be used as a part of a chassis structure of a vehicle. For example, a part of the box may become at least a part of a chassis of the vehicle, or a part of the box may become at least a part of a cross beam and a longitudinal beam of the vehicle.

In some embodiments, the battery may be an energy storage apparatus. The energy storage apparatus includes an energy storage container, an energy storage cabinet, or the like.

For the development of battery technologies, many design factors need to be considered, for example, performance parameters such as energy density, cycle life, discharge capacity, and charge and discharge rate, as well as the safety performance of the battery.

In the battery, in order to ensure the safety and operating performance of the battery cells in the battery, a heat exchange component is provided in the box of the battery, and coolant is provided in the heat exchange component to enable the heat exchange component to exchange heat with the battery cell, thereby enhancing the safety and operational reliability of the battery.

After the coolant of the battery leaks in the box, the coolant has certain conductivity, which may cause insulation failure of the battery, and easily cause a risk of electric shock. There are various factors that cause insulation failure of the battery, and it is impossible to accurately detect that the insulation failure of the battery is caused by coolant leakage, and it is impossible to timely prompt the user that the insulation failure of the battery is caused by coolant leakage. Additionally, when the coolant comes into contact with a high-voltage component inside the battery, it easily leads to a risk of fire or explosion of the battery.

In view of this, an embodiment of the present application provides a battery, including a box, a liquid leakage detection member, and a liquid discharge member. The liquid leakage detection member is disposed in the box to detect liquid in the box, the liquid leakage detection member is communicatively connected to a control apparatus to enable the control apparatus to control an alarm apparatus to work, and the liquid discharge member is fixed to a box bottom wall of the box.

In such a battery, by providing the liquid leakage detection member and the liquid discharge member, when the liquid leakage detection member detects that liquid leakage has occurred in the box, the control apparatus can control the alarm apparatus to issue alarm information, which can timely prompt the user that there is liquid leakage in the battery, and remind the user to evacuate in time. In addition, the liquid discharge member can discharge the liquid from the box, reducing a risk of the liquid in the battery coming into contact with the high-voltage component, reducing a risk of fire or explosion of the battery, and also reducing a risk of electric shock to the user.

The technical solution described in the embodiments of the present application is applicable to batteries and electric apparatuses using a battery.

The electric apparatus may be a vehicle, a mobile phone, a portable device, a notebook computer, a ship, a spacecraft, an electric toy, an electric tool, or the like. The vehicle may be a fossil fuel vehicle, a gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, for example, a game console, an electric toy car, an electric toy ship, an electric toy airplane, and the like. The electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, and an electric planer. The embodiments of the present application impose no special limitation on the foregoing electric apparatus.

For ease of description, the electric apparatus being a vehicle is used as an example for description of the following embodiments.

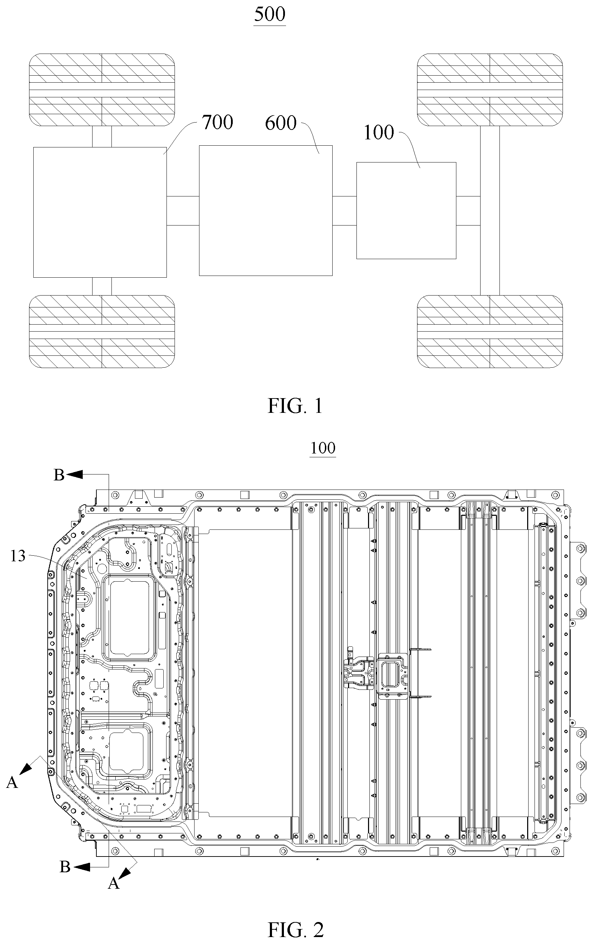

Referring to FIG. 1, FIG. 1 is a schematic structural diagram of a vehicle provided in some embodiments of the present application. The vehicle is provided with a battery 100, where the battery 100 may be disposed at the bottom, front, or rear of the vehicle. The battery 100 may be configured to supply power to the vehicle. For example, the battery 100 may be used as an operational power source for the vehicle.

The vehicle may further include a controller 600 and a motor 700, where the controller 600 is configured to control the battery 100 to supply power to the motor 700, for example, to satisfy power needs of start, navigation, and driving of the vehicle.

In some embodiments of the present application, the battery 100 can be used as not only the operational power source for the vehicle, but also a driving power source for the vehicle, replacing or partially replacing fossil fuel or natural gas to provide driving traction for the vehicle.

Referring to FIG. 2, FIG. 2 is a schematic diagram of a battery 100 provided in some embodiments of the present application. The battery 100 includes a battery cell 40 and a box 10, where the box 10 is configured to accommodate the battery cell 40.

The box 10 is a component for accommodating the battery cell 40, providing a placement space for the battery cell 40. The box 10 may be a variety of structures. In some embodiments, the box 10 may include a first box body 13 and a second box body 14. The first box body 13 and the second box body 14 fit together to define a placement space for accommodating the battery cell 40. The first box body 13 and the second box body 14 may be of various shapes, such as cylinder or cuboid. The first box body 13 may be a hollow structure with one side open, the second box body 14 may also be a hollow structure with one side open, where the open side of the second box body 14 is engaged with the open side of the first box body 13 so as to form a box 10 having a placement space. Alternatively, the first box body 13 is a hollow structure with one side open, and the second box body 14 is a plate-like structure, where the second box body 14 is engaged with the open side of the first box body 13 so as to form a box 10 having a placement space. As an example, the battery cell 40 may be a cylindrical battery cell, a prismatic battery cell, a pouch battery cell, or a battery cell 40 of another shape. The prismatic battery cell includes a square-shell battery cell, a blade-shaped battery cell, and a polygonal prismatic battery, such as a hexagonal prismatic battery. This is not particularly limited in the present application.

There may be one or more battery cells 40 in the battery 100. If a plurality of battery cells 40 are provided, the plurality of battery cells 40 may be connected in series, parallel, or series-parallel, where being connected in series-parallel means that the plurality of battery cells 40 are connected in both series and parallel. The plurality of battery cells 40 may be connected in series, parallel, or series-parallel first to form a battery module, and then a plurality of battery modules are connected in series, parallel, or series-parallel to form an entirety which is accommodated in the box 10. It is also possible that all the battery cells 40 are directly connected in series, parallel, or series-parallel to form an entirety which is then accommodated in the box 10.

The battery cell 40 may include a housing 41 and an electrode assembly. The housing 41 is configured to accommodate components such as the electrode assembly and an electrolyte. The housing 41 may be a steel housing, an aluminum housing, a plastic housing (for example, polypropylene), a composite metal housing (for example, copper-aluminum composite housing), an aluminum-plastic film, or the like. As an example, the housing 41 may include a housing body 42 and an end cover 43. The housing body 42 may be a hollow structure with an opening formed at one end, or the housing body 42 may be a hollow structure with openings formed at two opposite ends. The material of the housing body 42 may be made of various materials, such as copper, iron, aluminum, steel, and aluminum alloy.

The end cover 43 is a component that closes an opening of the housing body 42 to isolate the internal environment of the battery cell 40 from the external environment. The end cover 43 and the housing body 42 together define an accommodation space for accommodating the electrode assembly, the electrolyte, and other components. The end cover 43 may be connected to the housing body 42 by welding or rolling to close the opening of the housing body 42. The shape of the end cover 43 may fit the shape of the housing 41. For example, the housing body 42 is a cuboid structure, and the end cover 43 is a rectangular plate-like structure that fits the housing body 42. The end cover 43 may also be made of various materials, such as copper, iron, aluminum, steel, and aluminum alloy.

In the battery cell 40, one or two end covers 43 may be provided. In an embodiment where the housing body 42 is a hollow structure with openings formed at two ends, two end covers 43 may be provided correspondingly. The two end covers 43 respectively close the two openings of the housing body 42, and the two end covers 43 and the housing body 42 together define the accommodation space. In an embodiment where the housing body 42 is a hollow structure with an opening formed at one end, one end cover 43 may be provided correspondingly. The end cover 43 closes the opening at one end of the housing body 42, and the end cover 43 and the housing body 42 together define the accommodation space.

The electrode assembly includes a positive electrode, a negative electrode, and a separator. During charge and discharge of the battery cell 40, active ions (for example, lithium ions) are intercalated and deintercalated between the positive electrode and the negative electrode. The separator is disposed between the positive electrode and the negative electrode to prevent short circuit between the positive electrode and negative electrode and to allow the active ions to pass through.

In some embodiments, the positive electrode may be a positive electrode plate, and the positive electrode plate may include a positive electrode current collector and a positive electrode active substance region disposed on at least one surface of the positive electrode current collector, where the positive electrode active substance region has a positive electrode active material.

As an example, the positive electrode current collector includes two back-to-back surfaces in a thickness direction of the positive electrode current collector, and the positive electrode active substance region is disposed on either or both of the two opposite surfaces of the positive electrode current collector.

In some embodiments, the negative electrode may be a negative electrode plate, and the negative electrode plate may include a negative electrode current collector and a negative electrode active substance region disposed on either or both of the two back-to-back surfaces of the positive electrode current collector.

As an example, the negative electrode current collector includes two back-to-back surfaces in a thickness direction of the negative electrode current collector, and the negative electrode active substance region is disposed on either or both of the two back-to-back surfaces of the negative electrode current collector.

In some embodiments, the material of the positive electrode current collector may be aluminum, and the material of the negative electrode current collector may be copper.

In some embodiments, the electrode assembly further includes a separator, and the separator is disposed between the positive electrode and the negative electrode.

In some embodiments, the separator is an isolating film. The isolating film is not limited to a particular type in the present application, and may be any well-known porous isolating film with good chemical stability and mechanical stability.

In some embodiments, the separator is a solid electrolyte. The solid electrolyte is disposed between the positive electrode and the negative electrode, and simultaneously conducts ions and isolates the positive electrode and negative electrode.

In some embodiments, the battery cell 40 further includes an electrolyte, and the electrolyte conducts ions between the positive electrode and negative electrode. The electrolyte is not specifically limited in the present application, and may be selected as required. The electrolyte may be in a liquid state, a gel state, or a solid state.

In some embodiments, the electrode assembly is a wound structure. The positive electrode plate and the negative electrode plate are wound into a wound structure.

In some embodiments, the electrode assembly is a laminated structure.

The battery 100 according to the embodiments of the present application is described below with reference to FIGs. 2 to 7.

The battery 100 according to the embodiments of the present application includes: a box 10, a liquid leakage detection member 20, and a liquid discharge member 30. The liquid leakage detection member 20 is disposed in the box 10 to detect liquid in the box 10, and the liquid leakage detection member 20 is adapted to be communicatively connected to a control apparatus 200 to enable the control apparatus 200 to control an alarm apparatus 300 to work. The liquid discharge member 30 is disposed in the box 10, and the liquid discharge member 30 is fixed to a box bottom wall 11 of the box 10.

The liquid leakage detection member 20 is disposed in the box 10, the liquid leakage detection member 20 may be in a placement space 15 of the box 10, the liquid leakage detection member 20 can detect liquid in the box 10, when there is coolant leakage in the battery 100, the liquid leakage detection member 20 can detect the coolant leaked in the box 10, the liquid leakage detection member 20 may be a capacitive liquid leakage sensor, a resistive liquid leakage sensor, an ultrasonic liquid leakage sensor, or the like. The specific type of the liquid leakage detection member 20 is not specifically limited, as long as the liquid leakage detection member 20 can detect liquid in the box 10. The liquid leakage detection member 20 may be communicatively connected to the control apparatus 200. When the liquid leakage detection member 20 detects that there is liquid in the box 10, the control apparatus 200 controls the alarm apparatus 300 to issue alarm information, the alarm information may be audible alarm information, the alarm information may also be visual alarm information, which can timely prompt the user that there is liquid leakage in the battery 100, and remind the user to evacuate in time. The liquid discharge member 30 is disposed in the box 10, the liquid discharge member 30 is fixed to the box bottom wall 11 of the box 10, the liquid discharge member 30 may be fixed to the box bottom wall 11 of the box 10 by bolts, and the liquid discharge member 30 may also be snap-fitted to the box bottom wall 11 of the box 10. If there is liquid leakage in the box 10, the liquid is collected on the box bottom wall 11 of the box 10, by fixing the liquid discharge member 30 to the box bottom wall 11 of the box 10, the liquid in the box 10 can be discharged from the box 10 of the battery 100 in time. The liquid discharge member 30 may be set as a liquid discharge valve, and the liquid discharge valve may be a one-way valve.

Specifically, the control apparatus 200 can obtain detection information of the liquid leakage detection member 20 in real time. When the liquid leakage detection member 20 detects that there is liquid in the box 10, there is coolant leakage in the battery 100 at this time, the control apparatus 200 controls the alarm apparatus 300 to issue alarm information, which can timely prompt the user that there is liquid leakage in the battery 100, and remind the user to evacuate in time, reducing a risk to the life safety of user. When liquid in the box 10 leaks, the liquid is collected on the box bottom wall 11 of the box 10, the liquid is discharged from the box 10 of the battery 100 through the liquid discharge member 30, reducing a risk of the liquid in the battery 100 coming into contact with the high-voltage component, and reducing a risk of insulation failure of the battery 100, thereby reducing a risk of fire or explosion of the battery 100, and reducing a risk of electric shock to the user, thus enhancing the safety of the battery 100.

In the above technical solution, by providing the liquid leakage detection member 20 and the liquid discharge member 30, when the liquid leakage detection member 20 detects that liquid leakage has occurred in the box 10, the control apparatus 200 can control the alarm apparatus 300 to issue alarm information, which can timely prompt the user that there is liquid leakage in the battery 100, and remind the user to evacuate in time. In addition, the liquid discharge member 30 can discharge liquid from the box 10, reducing a risk of the liquid in the battery 100 coming into contact with the high-voltage component, reducing a risk of fire or explosion of the battery 100, and also reducing a risk of electric shock to the user.

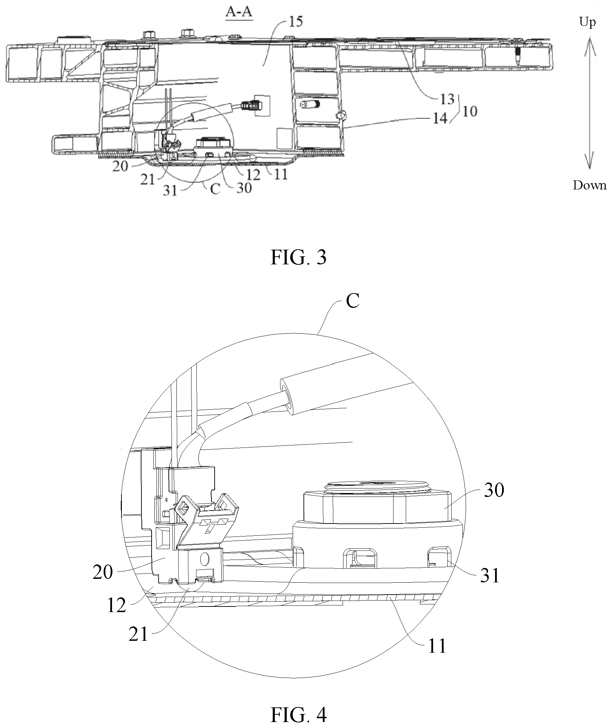

According to some embodiments of the present application, as shown in FIG. 4, a height of a detection end 21 of the liquid leakage detection member 20 is lower than a height of a liquid discharge port 31 of the liquid discharge member 30.

As shown in FIG. 4, the detection end 21 of the liquid leakage detection member 20 is configured to detect liquid in the box 10 of the battery 100, and the liquid leakage detection member 20 detects whether there is liquid in the box 10 of the battery 100 through the detection end 21. The liquid in the box 10 of the battery 100 is discharged from the box 10 of the battery 100 through the liquid discharge port 31 of the liquid discharge member 30. It should be noted that if the height of the detection end 21 of the liquid leakage detection member 20 is higher than the height of the liquid discharge port 31 of the liquid discharge member 30, when there is liquid in the box 10 of the battery 100, the liquid is first discharged from the box 10 of the battery 100 through the liquid discharge port 31 of the liquid discharge member 30, and can be detected by the liquid leakage detection member 20 only when a liquid level height of the liquid in the box 10 of the battery 100 reaches the height of the detection end 21 of the liquid leakage detection member 20, the liquid cannot be detected by the liquid leakage detection member 20 in time, and before the liquid is detected by the liquid leakage detection member 20, the liquid may be in contact with the high-voltage component. In the present application, by the height of the detection end 21 of the liquid leakage detection member 20 being lower than the height of the liquid discharge port 31 of the liquid discharge member 30, when there is liquid in the box 10 of the battery 100, before the liquid in the box 10 of the battery 100 is discharged from the box 10 of the battery 100 through the liquid discharge port 31 of the liquid discharge member 30, the liquid in the box 10 of the battery 100 is first detected by the liquid leakage detection member 20, which can more timely prompt the user that there is liquid leakage in the battery 100, and quickly remind the user to evacuate in time. This further reduces a risk to the life safety of user, and also further reduces a risk of the liquid in the battery 100 coming into contact with the high-voltage component, and further reduces a risk of insulation failure of the battery 100.

In the above technical solution, by the height of the detection end 21 of the liquid leakage detection member 20 being lower than the height of the liquid discharge port 31 of the liquid discharge member 30, when there is liquid in the box 10 of the battery 100, before the liquid in the box 10 of the battery 100 is discharged from the box 10 of the battery 100 through the liquid discharge port 31 of the liquid discharge member 30, the liquid in the box 10 of the battery 100 is first detected by the liquid leakage detection member 20, which can more timely prompt the user that there is liquid leakage in the battery 100, and quickly remind the user to evacuate in time. This further reduces a risk to the life safety of user, and also further reduces a risk of the liquid in the battery 100 coming into contact with the high-voltage component, and further reduces a risk of insulation failure of the battery 100.

According to some embodiments of the present application, the height of the liquid discharge port 31 of the liquid discharge member 30 is lower than a lowest height of high-voltage device in the box 10.

Along a height direction of the battery 100, that is, an up-down direction in FIG. 4, the height of the liquid discharge port 31 of the liquid discharge member 30 is lower than the lowest height of high-voltage device in the box 10. It should be noted that if the height of the liquid discharge port 31 of the liquid discharge member 30 is higher than the lowest height of high-voltage device in the box 10, when there is liquid in the box 10 of the battery 100, before the liquid in the box 10 of the battery 100 is discharged from the box 10 of the battery 100 through the liquid discharge port 31 of the liquid discharge member 30, there is a risk of the liquid in the box 10 of the battery 100 coming into contact with the high-voltage component. Therefore, in the present application, by the height of the liquid discharge port 31 of the liquid discharge member 30 being lower than the lowest height of high-voltage device in the box 10, when there is liquid in the box 10 of the battery 100, it can further reduce a risk of the liquid in the box 10 of the battery 100 coming into contact with the high-voltage component, and can further reduce a risk of insulation failure of the battery 100, thereby further reducing a risk of fire or explosion of the battery 100, and further reducing a risk of electric shock to the user, thus enhancing the safety of the battery 100.

In the above technical solution, by the height of the liquid discharge port 31 of the liquid discharge member 30 being lower than the lowest height of high-voltage device in the box 10, when there is liquid in the box 10 of the battery 100, it can further reduce a risk of the liquid in the box 10 of the battery 100 coming into contact with the high-voltage component, and can further reduce a risk of insulation failure of the battery 100, thereby further reducing a risk of fire or explosion of the battery 100, and further reducing a risk of electric shock to the user, thus enhancing the safety of the battery 100.

According to some embodiments of the present application, as shown in FIG. 4, the liquid discharge member 30 is disposed at a lowest position of an inner surface of the box bottom wall 11, and the liquid leakage detection member 20 is disposed corresponding to the lowest position of the inner surface of the box bottom wall 11.

When liquid leakage occurs in the box 10 of the battery 100, the liquid is accumulated at the lowest position of the inner surface of the box bottom wall 11, by disposing the liquid discharge member 30 at the lowest position of the inner surface of the box bottom wall 11, it can more timely discharge the liquid in the box 10 of the battery 100 from the box 10 of the battery 100, and can make the setting position of the liquid discharge member 30 appropriate. In addition, along the height direction of the battery 100, by disposing the liquid leakage detection member 20 corresponding to the lowest position of the inner surface of the box bottom wall 11, it can make the liquid leakage detection member 20 correspond to a position of the box bottom wall 11 where liquid is most likely to accumulate. This can make the liquid leakage detection member 20 timely detect whether there is liquid in the box 10 of the battery 100, thereby improving the detection accuracy of the liquid leakage detection member 20, timely prompting the user that there is liquid leakage in the battery 100, and reminding the user to evacuate in time.

In the above technical solution, by disposing the liquid discharge member 30 at the lowest position of the inner surface of the box bottom wall 11, it can more timely discharge the liquid in the box 10 of the battery 100 from the box 10 of the battery 100, and can make the setting position of the liquid discharge member 30 appropriate. In addition, by disposing the liquid leakage detection member 20 corresponding to the lowest position of the inner surface of the box bottom wall 11, it can make the liquid leakage detection member 20 correspond to a position of the box bottom wall 11 where liquid is most likely to accumulate. This can make the liquid leakage detection member 20 timely detect whether there is liquid in the box 10 of the battery 100, thereby improving the detection accuracy of the liquid leakage detection member 20, timely prompting the user that there is liquid leakage in the battery 100, and reminding the user to evacuate in time.

According to some embodiments of the present application, as shown in FIG. 4, the box bottom wall 11 is formed with a groove structure 12 recessed toward an outside of the box 10, and the detection end 21 of the liquid leakage detection member 20 is located in the groove structure 12.

Along an up-down direction of the battery 100, that is, along the height direction of the battery 100, the box bottom wall 11 is formed with a groove structure 12 recessed toward the lower portion of the box 10, and the detection end 21 of the liquid leakage detection member 20 is located in the groove structure 12. It should be noted that the lowest position of the inner surface of the box bottom wall 11 is a position where a bottom wall of the groove structure 12 is located. When there is liquid in the box 10 of the battery 100, the liquid is easily accumulated in the groove structure 12. Disposing the detection end 21 of the liquid leakage detection member 20 in the groove structure 12 can make the liquid leakage detection member 20 timely detect the liquid in the groove structure 12, which can further improve the detection accuracy of the liquid leakage detection member 20, and can more timely prompt the user that there is liquid leakage in the battery 100. This is conducive to reminding the user to evacuate in time, thereby making the arrangement position of the detection end 21 of the liquid leakage detection member 20 reasonable.

In the above technical solution, by disposing the detection end 21 of the liquid leakage detection member 20 in the groove structure 12, it can make the liquid leakage detection member 20 timely detect the liquid in the groove structure 12, which can further improve the detection accuracy of the liquid leakage detection member 20, and can more timely prompt the user that there is liquid leakage in the battery 100. This is conducive to reminding the user to evacuate in time, thereby making the arrangement position of the detection end 21 of the liquid leakage detection member 20 reasonable.

According to some embodiments of the present application, as shown in FIG. 4, the liquid discharge member 30 is disposed in the groove structure 12.

The liquid discharge member 30 is disposed in the groove structure 12, the bottom wall of the groove structure 12 is provided with the liquid discharge member 30, when there is liquid in the box 10 of the battery 100, the liquid is easily accumulated in the groove structure 12. Disposing the liquid discharge member 30 in the groove structure 12 is conducive to timely discharging the liquid from the box 10 of the battery 100, further reducing a risk of the liquid in the battery 100 coming into contact with the high-voltage component, and further reducing a risk of insulation failure of the battery 100, thereby further reducing a risk of fire or explosion of the battery 100, and further reducing a risk of electric shock to the user, thus enhancing the safety of the battery 100.

In the above technical solution, by disposing the liquid discharge member 30 in the groove structure 12, it is conducive to timely discharging the liquid in the box 10 of the battery 100, further reducing a risk of the liquid in the battery 100 coming into contact with the high-voltage component, and further reducing a risk of insulation failure of the battery 100, thereby further reducing a risk of fire or explosion of the battery 100, and further reducing a risk of electric shock to the user, thus enhancing the safety of the battery 100.

According to some embodiments of the present application, as shown in FIG. 4, the liquid leakage detection member 20 is spaced apart from the box bottom wall 11.

Along the height direction of the battery 100, that is, along the up-down direction of the battery 100, the liquid leakage detection member 20 is spaced apart from the box bottom wall 11. Furthermore, the detection end 21 of the liquid leakage detection member 20 is spaced apart from the box bottom wall 11, and a spacing distance between the liquid leakage detection member 20 and the box bottom wall 11 may be reasonably selected and set according to actual situations. With the liquid leakage detection member 20 being spaced apart from the box bottom wall 11, a probability of false alarms from the alarm apparatus 300 can be reduced due to an interference between the detection end 21 of the liquid leakage detection member 20 and the box bottom wall 11 during installation.

In the above technical solution, by the liquid leakage detection member 20 being spaced apart from the box bottom wall 11, a probability of false alarms from the alarm apparatus 300 can be reduced due to an interference between the detection end 21 of the liquid leakage detection member 20 and the box bottom wall 11 during installation.

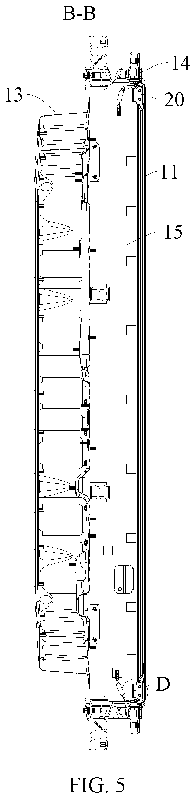

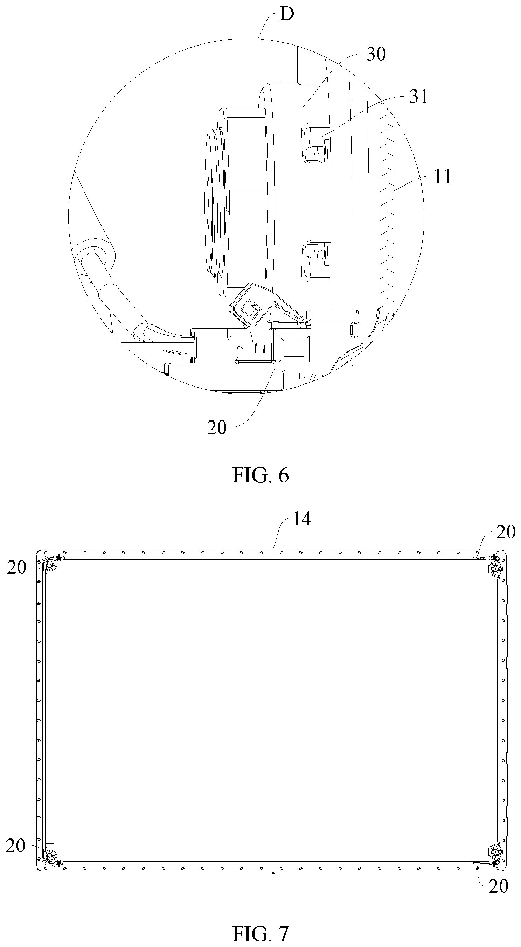

According to some embodiments of the present application, as shown in FIGS. 5 and 7, a plurality of liquid leakage detection members 20 may be provided. The plurality of liquid leakage detection members 20 are connected in parallel, and the plurality of liquid leakage detection members 20 are respectively disposed at different positions in the box 10.

A plurality of liquid leakage detection members 20 may be provided, and two, three, four, or five liquid leakage detection members 20 may be provided. The plurality of liquid leakage detection members 20 are all communicatively connected to the control apparatus 200, and the control apparatus 200 can receive detection information of any one of the liquid leakage detection members 20. The plurality of liquid leakage detection members 20 are respectively disposed at different positions in the box 10. It should be noted that the plurality of liquid leakage detection members 20 are respectively disposed at positions where liquid is most easily accumulated in the box 10, the box bottom wall 11 may be formed with a plurality of groove structures 12, and each groove structure 12 is provided with at least one liquid leakage detection member 20 correspondingly. With the plurality of liquid leakage detection members 20 being respectively disposed at different positions in the box 10, liquid detection can be simultaneously performed on a plurality of positions in the box 10, which is conducive to the liquid leakage detection member 20 detecting the liquid in the box 10 of the battery 100 when the vehicle is at different inclination angles, and when at least one liquid leakage detection member 20 detects that there is liquid in the box 10 of the battery 100, the control apparatus 200 controls the alarm apparatus 300 to issue alarm information.

In the above technical solution, by the plurality of liquid leakage detection members 20 being respectively disposed at different positions in the box 10, liquid detection can be simultaneously performed on a plurality of positions in the box 10, which is conducive to the liquid leakage detection member 20 detecting liquid in the box 10 of the battery 100 when the vehicle is at different inclination angles, and when at least one liquid leakage detection member 20 detects that there is liquid in the box 10 of the battery 100, the control apparatus 200 controls the alarm apparatus 300 to issue alarm information. In whatever inclination angle state the entire vehicle is, if liquid leakage occurs in the box 10, an alarm function can be achieved.

According to some embodiments of the present application, as shown in FIGs. 5 and 7, a plurality of liquid discharge members 30 may be provided, and one of the liquid leakage detection members 20 is disposed corresponding to at least one of the liquid discharge members 30.

A plurality of liquid discharge members 30 may be provided, and one of the liquid leakage detection members 20 is disposed corresponding to at least one of the liquid discharge members 30. As an example, the number of the liquid discharge members 30 is the same as the number of the liquid leakage detection members 20, the number of the liquid discharge members 30 and the number of the liquid leakage detection members 20 may both be two, three, four, five, or the like, with one liquid leakage detection member 20 disposed corresponding to one liquid discharge member 30. The plurality of liquid discharge members 30 are respectively disposed at different positions in the box 10, and the liquid discharge members 30 and the liquid leakage detection members 20 are arranged in pairs. With one liquid leakage detection member 20 being disposed corresponding to at least one liquid discharge member 30, when the liquid in the box 10 leaks, the plurality of liquid discharge members 30 can discharge liquid at different positions from the box 10 of the battery 100, reducing the risk of liquid accumulating in the box 10 of the battery 100, further reducing the risk of the liquid in the battery 100 coming into contact with the high-voltage component, thereby reducing the risk of insulation failure of the battery 100.

In the above technical solution, with one liquid leakage detection member 20 being disposed corresponding to at least one liquid discharge member 30, when liquid in the box 10 leaks, the plurality of liquid discharge members 30 can discharge liquid at different positions from the box 10 of the battery 100, reducing the risk of liquid accumulating in the box 10 of the battery 100, further reducing the risk of the liquid in the battery 100 coming into contact with the high-voltage component, thereby reducing the risk of insulation failure of the battery 100. In whatever inclination angle state the entire vehicle is, if liquid leakage occurs in the box 10, a liquid discharge function can be achieved.

According to some embodiments of the present application, as shown in FIGs. 3 and 4, the liquid leakage detection member 20 is fixed to the box 10.

The liquid leakage detection member 20 may be snap-fitted to the box 10 by a buckle, and the liquid leakage detection member 20 may also be mounted to the box 10 by bolts. As an example, the liquid leakage detection member 20 is snap-fitted to a side wall of the box 10 by a buckle. Fixing the liquid leakage detection member 20 to the box 10 can make the position of the liquid leakage detection member 20 stable, which can improve the detection accuracy of the liquid leakage detection member 20. In addition, this also facilitates assembly of the liquid leakage detection member 20, improves the assembly efficiency of the battery 100, and also facilitates maintenance and replacement of the liquid leakage detection member 20, thereby prolonging the service life of the battery 100.

In the above technical solution, by fixing the liquid leakage detection member 20 to the box 10, it can make the position of the liquid leakage detection member 20 stable, which can improve the detection accuracy of the liquid leakage detection member 20. In addition, this also facilitates assembly of the liquid leakage detection member 20, improves the assembly efficiency of the battery 100, and also facilitates maintenance and replacement of the liquid leakage detection member 20, thereby prolonging the service life of the battery 100.

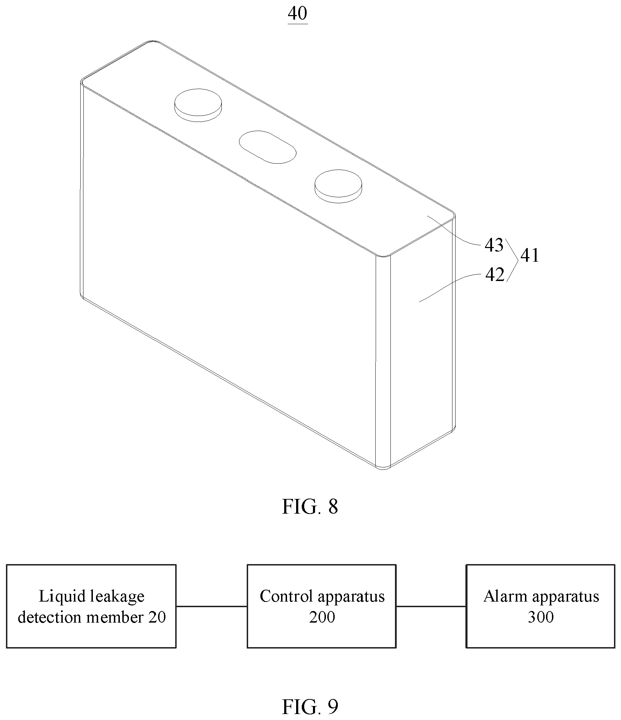

According to some embodiments of the present application, as shown in FIG. 9, the present application also provides a battery management system 400, including a battery 100, where the battery 100 is the battery 100 of the above embodiments; a control apparatus 200 and an alarm apparatus 300, where the control apparatus 200 is communicatively connected to the liquid leakage detection member 20 and communicatively connected to the alarm apparatus 300, and the control apparatus 200 controls the alarm apparatus 300 to work according to the detection information of the liquid leakage detection member 20.

The control apparatus 200 can obtain the detection information of the liquid leakage detection member 20 in real time. When the liquid leakage detection member 20 detects that there is liquid in the box 10, there is coolant leakage in the battery 100 at this time, the control apparatus 200 controls the alarm apparatus 300 to issue alarm information, which can timely prompt the user that there is liquid leakage in the battery 100, and remind the user to evacuate in time, reducing a risk to the life safety of user. When the liquid in the box 10 leaks, the liquid is collected on the box bottom wall 11 of the box 10, and the liquid is discharged from the box 10 of the battery 100 through the liquid discharge member 30, reducing a risk of the liquid in the battery 100 coming into contact with the high-voltage component, and reducing a risk of insulation failure of the battery 100, thereby reducing a risk of fire or explosion of the battery 100, and reducing a risk of electric shock to the user, thus enhancing the safety of the battery 100.

According to some embodiments of the present application, the alarm apparatus 300 is an audible alarm apparatus 300 and/or a visual alarm apparatus 300.

The alarm apparatus 300 is an audible alarm apparatus 300 or a visual alarm apparatus 300, or the alarm apparatus 300 includes an audible alarm apparatus 300 and a visual alarm apparatus 300. The audible alarm apparatus 300 can issue audible alarm information, which enables the user to hear the alarm information in time. The visual alarm apparatus 300 can issue visual alarm information, which enables the user to observe the alarm information in time.

According to some embodiments of the present application, as shown in FIG. 1, the present application also provides an electric apparatus 500, including the battery management system 400 of the above embodiments.

According to some embodiments of the present application, referring to FIGs. 3 and 7, a battery 100 includes a box 10, a plurality of liquid leakage detection members 20, and a plurality of liquid discharge members 30. The plurality of liquid leakage detection members 20 are all disposed in the box 10 to detect the liquid in the box 10, and the plurality of liquid leakage detection members 20 are all communicatively connected to a control apparatus 200, where the control apparatus 200 is communicatively connected to an alarm apparatus 300 to enable the control apparatus 200 to control the alarm apparatus 300 to work. The plurality of liquid leakage detection members 20 are disposed at different positions in the box 10, the plurality of liquid discharge members 30 are disposed in the box 10, and the plurality of liquid discharge members 30 are fixed to a box bottom wall 11 of the box 10, the plurality of liquid discharge members 30 are disposed at different positions in the box 10, and the plurality of liquid discharge members 30 are disposed in one-to-one correspondence with the plurality of liquid leakage detection members 20.

It should be noted that, without conflict, the embodiments and features in the embodiments in the present application may be combined with each other.

In the description of this specification, the description with reference to the terms "one embodiment", "some embodiments", "illustrative embodiment", "example", "specific example", "some examples", or the like means that a specific feature, structure, material, or characteristic described with reference to the embodiment or example is included in at least one embodiment or example of the present application. In this specification, descriptions of examples of the above terms do not necessarily refer to the same embodiment or example. Moreover, the specific features, structures, materials, or characteristics described may be combined in a suitable manner in any one or more embodiments or examples.

Although the embodiments of the present application have been shown and described, persons of ordinary skill in the art can understand that various changes, modifications, substitutions, and variants of these embodiments may be made without departing from the principle and essence of the present application, and the scope of the present application is limited by the claims and its equivalents.

## Claims

1. A battery, comprising:
a box;
a liquid leakage detection member, wherein the liquid leakage detection member is disposed in the box to detect liquid in the box and is adapted to be communicatively connected to a control apparatus to enable the control apparatus to control an alarm apparatus to work; and
a liquid discharge member, wherein the liquid discharge member is disposed in the box, and is fixed to a box bottom wall of the box.

2. The battery according to claim 1, wherein a height of a detection end of the liquid leakage detection member is lower than a height of a liquid discharge port of the liquid discharge member.

3. The battery according to claim 2, wherein the height of the liquid discharge port of the liquid discharge member is lower than a lowest height of a high-voltage device in the box.

4. The battery according to any one of claims 1 to 3, wherein the liquid discharge member is disposed at a lowest position of an inner surface of the box bottom wall, and the liquid leakage detection member is disposed corresponding to the lowest position of the inner surface of the box bottom wall.

5. The battery according to any one of claims 1 to 4, wherein the box bottom wall is formed with a groove structure recessed toward an outside of the box, and the detection end of the liquid leakage detection member is located in the groove structure.

6. The battery according to claim 5, wherein the liquid discharge member is disposed in the groove structure.

7. The battery according to any one of claims 1 to 6, wherein the liquid leakage detection member is spaced apart from the box bottom wall.

8. The battery according to any one of claims 1 to 7, wherein the battery comprises a plurality of liquid leakage detection members, wherein the plurality of liquid leakage detection members are connected in parallel and are respectively disposed at different positions in the box.

9. The battery according to claim 8, wherein the battery comprises a plurality of liquid discharge members, and one of the liquid leakage detection members is disposed corresponding to at least one of the liquid discharge members.

10. The battery according to any one of claims 1 to 9, wherein the liquid leakage detection member is fixed to the box.

11. A battery management system, comprising:
a battery, wherein the battery is the battery according to any one of claims 1 to 10; and
a control apparatus and an alarm apparatus, wherein the control apparatus is communicatively connected to the liquid leakage detection member and communicatively connected to the alarm apparatus, and the control apparatus controls the alarm apparatus to work according to detection information of the liquid leakage detection member.

12. The battery management system according to claim 11, wherein the alarm apparatus is an audible alarm apparatus and/or a visual alarm apparatus.

13. An electric apparatus, comprising the battery management system according to claim 11 or 12.
